# EUROPEAN PATENT SPECIFICATION

(11) **EP 3 136 371 B1**
(45) Date of publication and mention of the grant of the patent: **17.04.2024**
(21) Application number: 15382435.4
(22) Date of filing: 31.08.2015
(51) Int. Cl.: G08G 5/00

(54) **AIR VEHICLE NAVIGATION METHOD VIA A COMMON RUNTIME AIRCRAFT INTENT DATA STRUCTURE**
LUFTFAHRZEUGNAVIGATIONSVERFAHREN ÜBER EINE GEMEINSAME LAUFZEITABSICHTSDATENSTRUKTUR EINES FLUGZEUGS
PROCÉDÉ DE NAVIGATION D'UN VÉHICULE AÉRIEN PAR L'INTERMÉDIAIRE D'UNE STRUCTURE DE DONNÉES COMMUNE D'INTENTION DE TEMPS D'EXÉCUTION D'AÉRONEF

(43) Date of publication of application: 01.03.2017
(73) Proprietor: The Boeing Company, Arlington, VA 22202 (US)
(72) Inventor: NAVARRO FELIX, Francisco A., 28042 MADRID (ES); QUEREJETA MASAVEU, Carlos, 28042 MADRID (ES); CUADRADO SANCHEZ, Jesús, 28042 MADRID (ES); VIVIANI, Gary, 28042 MADRID (ES)
(74) Representative: Clarke, Modet y Cía., S.L.

(56) References cited:
- EP-A1- 2 040 137
- EP-A1- 2 482 269
- EP-A1- 2 685 440
- EP-A1- 2 801 963
- JAVIER LOPEZ-LEONES ET AL: "The Aircraft Intent Description Language: A key enabler for air-ground synchronization in Trajectory-Based Operations", DIGITAL AVIONICS SYSTEMS CONFERENCE, 2007. DASC '07. IEEE/AIAA 26 TH, IEEE, PI, 1 October 2007 (2007-10-01), pages 1.D.4-1, XP031166283, ISBN: 978-1-4244-1107-8

## Description

### TECHNICAL FIELD

The present disclosure relates to methods of navigation for air vehicles, the methods comprising defining aircraft trajectories which an air vehicle follows. The aircraft trajectories are defined in an Aircraft Intent Description Language (AIDL) which univocally defines the way an air vehicle is to be operated in order to follow a determinate trajectory. The aircraft trajectories are defined and edited by means of a Common Runtime Aircraft Intent Data Structure (CRAIDS) which establishes a hierarchy and centralizes dependencies among instructions that define an aircraft trajectory.

The methods of the present disclosure are applicable in the field of civil and military Air Traffic Management, Air Traffic Control and Air Traffic Navigation and Planning.

### BACKGROUND

Current Air Traffic Management (ATM) Systems are being developed according to an approach focused on increasing capacity, efficiency and safety, while reducing environmental impact. These objectives require a paradigm shift from a system that manages aerospace based on tactical intervention (by human operators) to a more strategic, integrated and collaborative one that relies on coordinated and strategic trajectory de-confliction supported by advanced automation tools. According to the new paradigm, the aircraft trajectory becomes the centerpiece of a new set of operating procedures collectively referred to as Trajectory Based Operations (TBO).

TBO paradigm is the subject of extensive investigation worldwide within the course of the major ATM modernization and UAS (Uninhabited Aerial Systems) insertion initiatives, where it is recognized that novel methods to define and predict aircraft trajectories with higher fidelity and accuracy are needed along with advanced tools to enable their computational treatment so as to facilitate the introduction of higher levels of automation and autonomy in air vehicle operations.

Aircraft Intent Description Language (AIDL) is a first attempt to define aircraft trajectories unambiguously. When defining and executing air vehicle trajectories defined by means of AIDL, six functions can be acknowledged: a) Trajectory Modeling; b) Intent Generation; c) Intent Inference; d) Trajectory Prediction; e) Flight Control, and; f) State Estimation.

Trajectory Modeling basically comprises planning, editing and visualizing intended aircraft trajectories, using Aircraft Intents (Al), which univocally define a precise way an air vehicle is to be operated. In other words, by means of an Al-based Trajectory Modeling, a precise a-priory definition of the aircraft's guidance strategy and aircraft's motion is achieved, thus precisely defining an aircraft's trajectory.

Intent Generation basically comprises finding out a determinate AI which satisfies a given constraint or a given set of constraints to which the desired aircraft trajectory must be restricted.

Intent Inference basically comprises discovering (inferring) the most likely AI which gave rise to a known aircraft trajectory through reverse engineering from observations of its geometry and timing (e.g. from radar tracks, telemetry data or recorded navigation data).

Trajectory Prediction basically comprises finding out (predicting) an aircraft trajectory that results from a given instance of Al, based on models of the aircraft performance and the atmospheric conditions (pressure, temperature and wind) in which the flight takes place.

Flight Control comprises automatically and precisely executing a given instance of Al.

State Estimation comprises making use of the precise information comprised within an AI instance to find out air vehicle state information at a certain point along its trajectory.

After several years of investigation in the field of ATM systems, many problems have been found which are worth being addressed.

The first of these problems refers to a lack of common shared data structure to handle aircraft instances in AIDL. The abovementioned functions related to ATM are typically tackled by means of modules which either "produce" or "consume" AIDL instances. There is thus a need to develop a common AIDL data structure for defining aircraft trajectories, for the different modules involved in air vehicle's trajectory definition and execution to take advantage thereof.

Another problem concerning ATM systems can be regarded as a lack of unified interface to address all of the abovementioned functions.

An additional problem refers to a lack of standard encoding for the AI instances. It would be desirable to develop a standard way in which to encode and serialize AIDL instances.

Another problem that can be observed when facing trajectory definition and execution using AIDL refers to the validation of AI instances. Since AIDL is a formal language, there must be a series of "lexical" and "syntactical" rules that should be validated in order to ensure that a determinate AI instance "makes sense" or satisfactorily fulfils the requirements established by the user or ATM system manager.

EP2801963A1 discloses a generation of an aircraft intent description enriching the basic flight intent description with additional information expressed in a formal language (AIDL) that provides an unambiguous four-dimensional description of an aircraft's intended motion and configuration during a period of flight.

EP2040137A1 discloses how to produce a description of aircraft intent expressed using a formal language (AIDL) to predict aircraft trajectory. Rules are used to generate a set of instructions describing the aerodynamic configuration and the motion of the aircraft. Instructions are checked so they describe unambiguously the aircraft's trajectory.

EP2482269A1 discloses how the flight intent is used alongside other information to generate the aircraft intent that does describe unambiguously the aircraft's trajectory. It determines which degrees of freedom of motion of the aircraft for each flight segment are defined and expresses the flight intent for that flight segment using a formal language (AIDL).

### SUMMARY

In order to solve the inconveniences and address the issues mentioned above, an Air Vehicle Navigation Method via a Common Runtime Aircraft Intent data Structure (CRAIDS) is provided, as set out in appended claim 1.

According to an exemplary embodiment of the method, the step of flying the air vehicle according to the edited aircraft trajectory includes:
a. computing the edited aircraft trajectory, this leading to a set of operations to be performed by the air vehicle, wherein computation of the edited aircraft trajectory is a process which, at each stage of the flight, includes:
   - updating air vehicle's state vector (the air vehicle's state vector comprising flight related variables);
   - assessing, according to the air vehicle's state vector, which instructions in each thread are still valid, wherein this assessment includes evaluating triggers and conditions in each thread, and;
   - determining the operations to be performed so that, when executed by the air vehicle, the air vehicle flies according to the instructions (and associated effects) still valid;
b. commanding the air vehicle to execute the set of operations.

As a whole, the computation process of an aircraft trajectory preferably includes:
a) obtaining air vehicle's initial conditions (getting the initial conditions) for a flight;
b) determining a first operation within the list of operations (getting the operations), wherein the first operation comprises first instructions in each and every of the threads, and effects associated to these instructions;
c) updating an air vehicle's state vector while the first operation is performed, wherein the air vehicle's state vector comprises flight related variables;
d) assessing, according to the air vehicle's state vector, which instructions in each thread are still valid, wherein this step includes evaluating the triggers and conditions in each thread;
e) determining next operations (updating operations) within the list of operations, wherein a next operation within the list of operations includes all the instructions still valid at a given stage of the aircraft trajectory, and the effects associated to these valid instructions, and;
f) ending (completing) trajectory computation when, at a given stage of the flight trajectory, no instructions upon a thread are still valid.

The air vehicle navigation method preferably includes verifying Aircraft Intent Description Language syntax (AIDL syntax) of the instructions comprising the threads of the edited trajectory, to ensure that aircraft performance limitations are respected, that all the instructions make sense and are coherent with one another, and that the threads are complete.

According to the invention, at least one instruction node upon at least one thread of the aircraft trajectory is a composite node, wherein a composite node includes a set of instruction nodes (typically focused on solving a particular task) with their associated trigger nodes.

With regards to a composite node, according to the invention:
1. the fulfillment of a condition associated to a trigger in the thread which immediately precedes the mentioned composite node starts the validity of the first instruction of the composite node, and;
2. the fulfillment of a condition of a trigger in the composite node which is associated to the last instruction in the composite node starts the validity of the instruction in the thread which immediately follows the composite node.

Also according to a possible embodiment of the air vehicle navigation method, at least one instruction node upon at least one thread of the aircraft trajectory may be a conditional composite node, wherein a conditional composite node includes at least two sets of instruction nodes with their associated trigger nodes.

With regards to a conditional composite node, it can be noted that:
1. the start of validity of either set of instruction nodes of the conditional composite node is subjected to the fulfillment of a condition of the conditional composite node;
2. the fulfillment of the condition associated to the trigger in the thread which immediately precedes the conditional composite node starts the assessment of the mentioned condition of the conditional composite node, and;
3. the fulfillment of the condition of a trigger in the conditional composite node which is associated to the last instruction in either set of instructions of the conditional composite node starts the validity of the instruction in the thread which immediately follows the conditional composite node.

According to a possible embodiment of the air vehicle navigation method, at least one instruction node upon at least one thread of the aircraft trajectory may be a loop node, wherein a loop node includes a set of instruction nodes with their associated trigger nodes.

With regards to a loop node, it can be noted that:
1. the fulfillment of the condition associated to the trigger in the thread which immediately precedes the loop node starts the assessment of a main condition of the loop node;
2. the start of validity of the first instruction of the set of instructions comprising the loop node is subjected to the fulfillment of the mentioned main condition of the loop node;
3. if the main condition of the loop node is not fulfilled, the validity of the loop node ends and the instruction in the thread immediately following the loop node starts its validity, and;
4. the fulfillment of a condition of a trigger node which is associated to the last instruction node within the set of instruction nodes comprising the loop node starts again the assessment of the main condition of the loop node.

According to the invention, the deletion of a node in a thread involves deleting all sets of instruction nodes comprised within the deleted node (i.e. deleting the child nodes pending from the deleted node).

Each thread according to the invention defines a branch of a hierarchical tree, the hierarchical tree including a root node defining the aircraft trajectory, wherein the branches defined by each thread directly derive from the root node, such that each branch defines the aircraft trajectory according to a different degree of freedom.

According to an examplary embodiment of the air vehicle navigation method at least one thread includes instructions to univocally define aircraft's motion in a vertical plane.

Also according to an examplary embodiment of the air vehicle navigation method, at least one thread includes instructions to univocally define aircraft's motion in a horizontal plane (it preferably includes instructions to fly the air vehicle towards certain waypoints in a horizontal plane embracing the aircraft trajectory).

According to an examplary embodiment of the method at least one thread includes instructions to univocally define aircraft's specific maneuvers at each stage of the flight (i.e. to perform certain maneuvers such as landing gear deployment, for instance).

Lastly, according to an examplary embodiment of the air vehicle navigation method, at least one thread includes instructions to univocally define/specify aircraft's speed and acceleration.

According to an examplary embodiment of the air vehicle navigation method, the end of validity of an instruction within a determined thread is established by the activation of a trigger which is associated to that instruction; the activation of said trigger also establishes the start of validity of the next instruction in that thread (the instruction immediately following that trigger). The activation of a trigger is subjected to the fulfillment of a condition specified by that trigger and/or is subjected to the activation of another trigger associated to another instruction in any thread. By means of this strategy, different instructions within the same and/or different threads may be synchronized.

A computer readable medium comprising instructions to carry out the method described above is also presented herewith.

According to an embodiment of the Common Aircraft Intent Data Structure (CRAIDS), CRAIDS is a data structure which centralizes and unifies the different interfaces of the aircraft trajectories' consumption/production systems.

According to an additional/alternative embodiment of the Common Aircraft Intent Data Structure (CRAIDS), CRAIDS is a component that centralizes the serialization and persistence of an AIDL-based aircraft trajectory.

According to an additional/alternative embodiment of the Common Runtime Aircraft Intent Data Structure (CRAIDS), CRAIDS is a system that centralizes the syntactical/lexical validation of an aircraft trajectory defined by means of AIDL.

According to an additional/alternative embodiment of the Common Runtime Aircraft Intent Data Structure (CRAIDS), CRAIDS is an ensemble of services that centralize the security of production/consumption of AIDL-based aircraft trajectories.

### BRIEF DESCRIPTION OF THE FIGURES

Figure 1: shows a schematic diagram of different architecture modules, comprising functions and/or systems that produce/consume Aircraft Trajectories making use of a Common Aircraft Intent Data Structure.
Figure 2: shows a simplified scheme of the relationship between the processes of editing (producing) an aircraft trajectory using AIDL and flying (consuming) an air vehicle making use of a Common Runtime Aircraft Intent Data Structure (CRAIDS) in which aircraft trajectories are edited, according to the air vehicle navigation method of the present disclosure.
Figure 3: shows in a simplified manner how an aircraft trajectory is described in different threads, according to CRAIDS, in which a hierarchical tree structure with different nodes may be appreciated.
Figure 4: shows a complementary scheme to the one showed in Figure 3, in which one of the nodes (Composite Node "Composite1" in Lateral Thread) has been replaced by another node (Loop node).
Figure 5A: shows the first part of a scheme of the different steps and interfaces involved in the process of editing a trajectory making use of CRAIDS.
Figure 5B: shows the second part of the scheme shown in Figure 5A, where the different steps and interfaces involved in the process of editing a trajectory making use of CRAIDS are depicted.
Figure5C: shows the third part of the scheme shown in Figure 5A and Figure 5B, where the different steps and interfaces involved in the process of editing a trajectory making use of CRAIDS are depicted.
Figure 6A: shows the first part of a scheme of the different steps and interfaces involved in the process of flying an air vehicle departing from an aircraft trajectory which has been defined in AIDL and edited taking advantage of CRAIDS.
Figure 6B: shows the second part of the scheme shown in Figure 6A.
Figure 6C: shows the third part of the scheme shown in Figure 6A and Figure 6B.
Figure 6D: shows the fourth part of the scheme shown in Figure 6A, Figure 6B and Figure 6C.
Figure 7: shows a scheme of the different steps involved in a computation process of an aircraft trajectory edited in CRAIDS.

### DETAILED DESCRIPTION

The following is a description of exemplary embodiments of the air vehicle navigation method.

The air vehicle navigation method preferably comprises determining initial conditions for the flight and establishing a set of trajectory requirements or flight constraints regarding an aircraft trajectory which an air vehicle is to follow. The method additionally comprises defining and editing an aircraft trajectory according to the established constraints and the initial conditions, and flying the air vehicle according to the defined trajectory.

As already introduced, the aircraft trajectory definition makes use of AIDL.

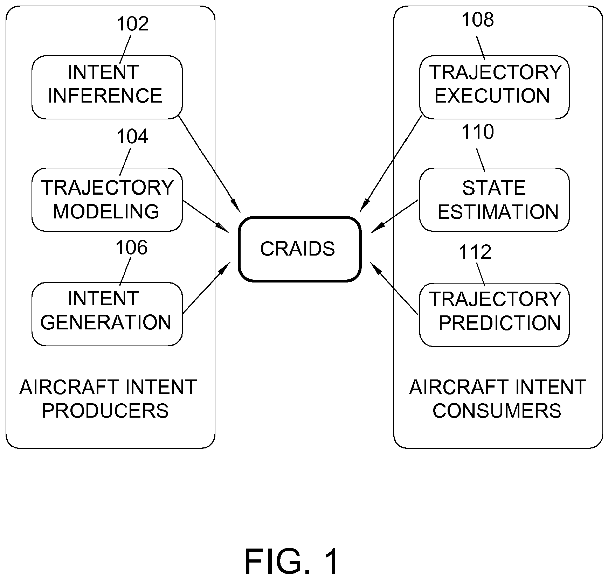

Figure 1 shows a schematic diagram of the different functions/systems concerning the present air vehicle navigation method.

As shown in Figure 1, there are six main functions/systems (which are divided into modules 102, 104, 106, 108, 110, 112 represented by boxes) involved in trajectory definition and execution. The six functions/systems make use of Aircraft Intents, Al, expressed in AIDL. Three functions/systems relate to what can be regarded as Trajectory Consumption (Aircraft Intent Consumers 108, 110, 112). The other three functions/systems may be regarded as Trajectory Production functions/systems (Aircraft Intent Producers 102, 104, 106).

According to Figure 1, there are three main AI producers: Intent Inference 102, Trajectory Modeling 104 and Intent Generation 106. There are also three main AI consumers: Trajectory execution (also called Flight Control -FC-) 108, State Estimation 110, and Trajectory Prediction 112.

As a part of the air vehicle navigation method, the present disclosure describes a method of defining and editing an aircraft trajectory by means of a data structure which, for the purposes of the present disclosure, is arbitrarily named as CRAIDS (Common Runtime Aircraft Intent Data Structure).

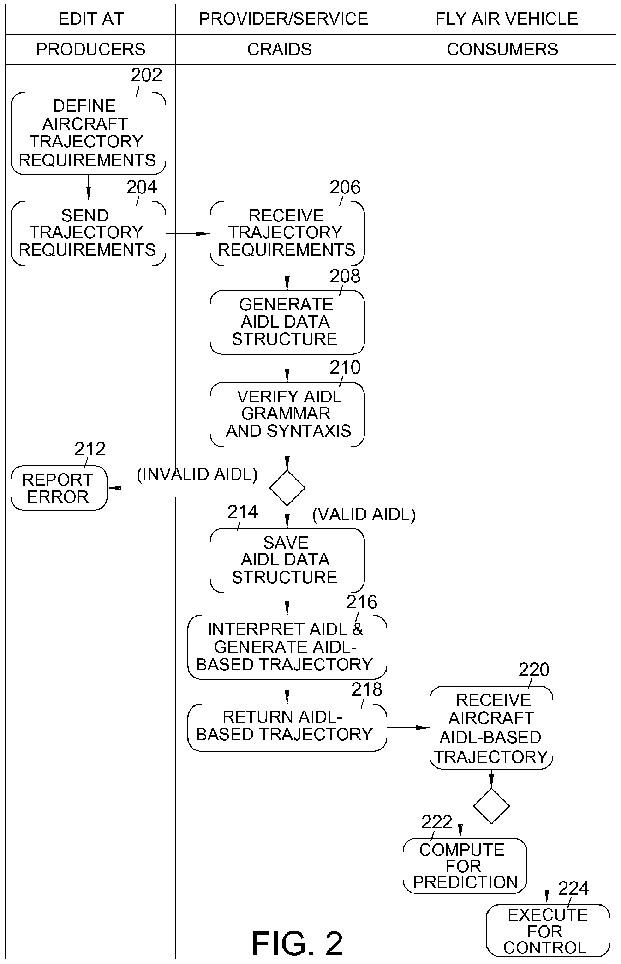

Figure 2 shows a simplified scheme of a preferred embodiment of the processes of editing (producing) an aircraft trajectory using AIDL and flying (computing the aircraft trajectory) an air vehicle making use of CRAIDS Data Structure (in which aircraft trajectories are edited), and how these processes are related. The scheme is divided into three columns representing interfaces of either AI Producers, AI Consumers and CRAIDS interface, these interfaces being respectively named as "EDIT AT" (for Aircraft Trajectory edition), Fly Air Vehicle and Provider/Service (as the interface for CRAIDS).

As can be seen in Figure 2, producers (systems and/or users wanting to edit an aircraft trajectory) first define 202 some aircraft trajectory requirements and send 204 these requirements to an edition module incorporating CRAIDS. When the module incorporating CRAIDS receives 206 these trajectory requirements, it generates 208 an AIDL Data Structure (CRAIDS) defining the aircraft trajectory and verifies 210 grammar and syntax rules of the generated CRAIDS. If the syntax and/or grammar is invalid, the module incorporating CRAIDS returns an error 212 to the producer, indicating that there may be some inconsistency in the initial conditions and/or flight requirements. If the syntax and grammar of the generated CRAIDS are found to be valid, the CRAIDS data structure defining an aircraft trajectory is saved 214.

Whenever a consumer (a system and/or a user wanting to take advantage of a predefined aircraft trajectory defined and edited by means of CRAIDS) wants to check and/or use an aircraft trajectory, the consumer opens a file where the CRAIDS structure is saved, the module incorporating CRAIDS interprets the saved CRAIDS and generates 216 an AIDL-based aircraft trajectory and returns 218 this AIDL-based trajectory to the consumer. The consumer receives 220 this AIDL-based aircraft trajectory and, depending on which type of consumption it may want to perform (a Trajectory Prediction -TP- or a Flight Control -FC-), it either computes 222 a trajectory/partial trajectory or it either executes 224 the AIDL-based aircraft trajectory, thus commanding the air vehicle to execute maneuvers tending to execute an aircraft trajectory as defined by CRAIDS.

According to a preferred embodiment of the air vehicle navigation method, definition/edition of an aircraft trajectory making use of CRAIDS involves defining the aircraft trajectory according to at least four different threads (which may also be named as patterns or approaches). Each of the threads is an approach of aircraft trajectory according to a different degree of freedom.

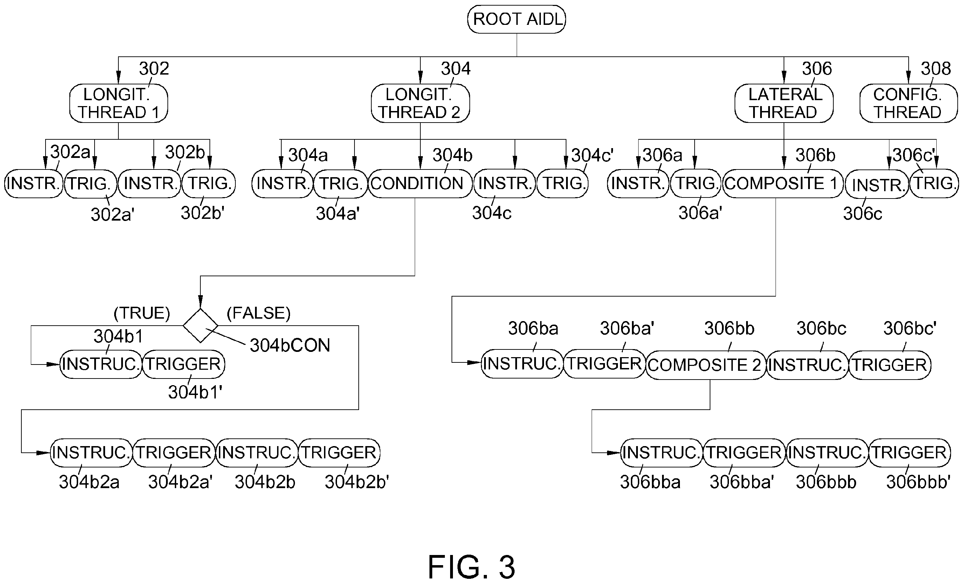

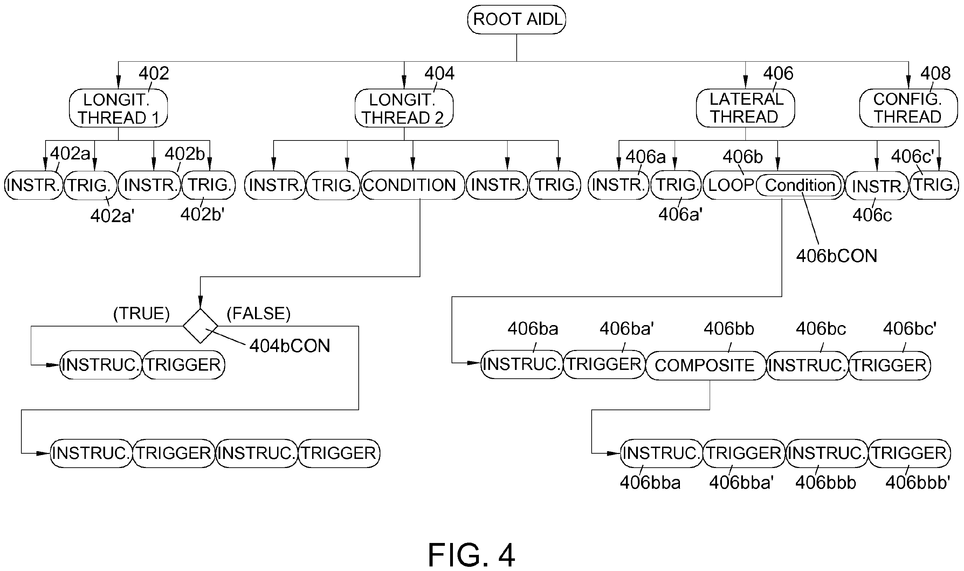

Figure 3 and Figure 4 schematically depict how an aircraft trajectory is defined/edited by means of CRAIDS, where these threads are shown. The edition of this aircraft trajectory, as will be explained below, can be assumed as the edition of hierarchical tree in which the Root Node (Root AIDL Node) is the Aircraft Trajectory and the other nodes (child nodes) of the hierarchical tree refer to instructions and/or conditions that must be fulfilled in order to define the aircraft trajectory in all its degrees of freedom.

One of these four threads is arbitrarily named as "Longitudinal Thread 1" 302, 402. Longitudinal Thread 1 defines an aircraft trajectory by means of a series of instructions 302a, 302b, 402a, 402b which univocally define aircraft motion in a vertical plane, i.e. the instructions 302a, 302b, 402a, 402b are directed to fix one degree of freedom in the aircraft's motion, namely the altitude. The instructions 302a, 302b, 402a, 402b concern determinate altitudes or altitude ranges to which the air vehicle must restrict when flying along certain waypoints.

Longitudinal thread 1 comprises both instructions 302a, 302b, 402a, 402b (an altitude constraint to be fulfilled) and triggers 302a', 302b', 402a', 402b'; a trigger determines the end of the "period" of validity of an instruction and the beginning of the "period" of validity of the next instruction in the thread. Both the instruction and the trigger may be conditioned to the fulfillment of further conditions or instructions which may eventually concern other threads which also define the aircraft trajectory (according to other degrees of freedom). The word period may be understood either as a strict time period, or either as an interval in which another flight variable has a certain value.

Another pattern or thread defining the aircraft trajectory is arbitrarily named as "Longitudinal Thread 2" 304, 404. With reference to Figure 3, Longitudinal thread 2 defines an aircraft trajectory by means of a series of instructions 304a, 304c concerning air vehicle's speed and acceleration (or engine). Longitudinal Thread 2 also comprises triggers 304a', 304c' and, as any other thread, the validity of an instruction (given by its associated trigger) may be conditioned to the fulfillment of a determinate condition or instruction which may eventually concern another thread.

Another pattern or thread defining the aircraft trajectory is arbitrarily named as "Lateral Thread" 306, 406. The Lateral Thread defines an aircraft trajectory by way of establishing the coordinates in a horizontal plane over which the air vehicle must pass by, at the different stages of the flight. Coordinates are specified in the form of instructions 306a, 306c, 406a, 406c comprising geometrical maneuvers in order to guide the air vehicle towards those coordinates. As with the other threads, the Lateral Thread 306, 406 comprises triggers 306a', 306c', 406a', 406c'. The validity of the instructions (given by their associated triggers) may be conditioned to the fulfillment of other conditions or instructions which may eventually concern other threads.

The fourth pattern or thread is arbitrarily named as "Configuration Thread" 308, 408. The Configuration Thread 308, 408 defines an aircraft trajectory through the very specific maneuvers that a determinate air vehicle must carry on (e.g. high lift, landing gears, flaps deployment/retraction) at each stage along the flight. The Configuration Thread 308, 408 is typically dependant on the type of air vehicle. As with the other threads, the Configuration Thread 308, 408 comprises triggers, and the validity of the instructions associated thereto may be conditioned to the fulfillment of other conditions or instructions which may eventually concern other threads.

As shown in Figure 3, the "Longitudinal Thread 1" 302 comprises a series of two instructions 302a, 302b with its corresponding triggers 302a', 302b'.

An instruction specifies a certain effect (e.g. altitude constraint) and a certain value (specifier) for said effect. The trigger specifies the termination (the end of validity) for the instruction placed immediately before.

Figure 3 represents a series of instructions 304a, 304c with its corresponding triggers 304a', 304c' for "Longitudinal Thread 2". As shown in Figure 3, among the first instruction 304a and the last instruction 304c of Longitudinal Thread 2, there is a Conditional Composite 304b. This Conditional Composite 304b comprises different series of instructions with their corresponding triggers (two series of instructions, for the case shown in Figure 3). The Conditional Composite 304b first evaluates the fulfillment of a certain condition 304bCON. Depending on this evaluation, one of the series of instructions comprising the Conditional Composite 304b becomes valid. Once the last instruction 304b1, 304b2b of the validated series of instructions ends its validity, the next instruction 304c upon the thread starts its validity. In the case shown in Figure 3, one of the series of instructions comprising the Conditional Composite 304b comprises one instruction 304b1 and one trigger 304b1', and the other series of instructions comprising the Conditional Composite 304b comprises two instructions 304b2a, 304b2b with its corresponding two triggers 304b2a', 304b2b'. The series of instructions comprising the Conditional Composite 304b may either be specifically defined for the Longitudinal Thread 2, or may either be series of instructions of other threads defining the aircraft trajectory (i.e. the condition 304bCON of the Conditional Composite 304b of the Longitudinal Thread 2 may invoke series of instructions belonging to other threads).

Figure 3 also depicts a series of instructions 306a, 306c with its corresponding triggers 306a', 306c' for the "Lateral Thread" defining the aircraft trajectory. In Figure 3, the series of instructions for the Lateral Thread 306 comprises a first instruction 306a with its corresponding trigger 306a', a First Intent Composite (Composite 1) 306b, and a last instruction 306c with its corresponding last trigger 306c'. An Intent Composite is a condensed way of expressing another series of instructions for defining the aircraft trajectory, in this case, among the first trigger 306a' and the last instruction 306c of the Lateral Thread 306.

The First Intent Composite (Composite 1) 306b in turn comprises a first instruction 306ba with its corresponding first trigger 306ba', a Second Intent Composite (Composite 2) 306bb and a last instruction 306bc with its corresponding last trigger 306bc'.

The Second Intent Composite (Composite 2) 306bb is another series of instructions for defining the aircraft trajectory according to the Lateral Thread 306b, in this case, among the first trigger 306ba' and the last instruction 306bc of the series of instructions comprising the First Intent Composite 306b.

The Second Intent Composite (Composite 2) 306bb in turn comprises two instructions 306bba, 306bbb ordered one after the other, with its corresponding two triggers 306bba', 306bbb', the last instruction 306bbb being valid only when the first instruction 306bba ends its period of validity and the first trigger 306bba' leads into the last instruction306bbb.

Figures 3 and 4 only schematically show a "Configuration Thread" 308, 408, without giving any particular detail on the series of instructions comprising said Configuration Thread 308, 408.

Figure 4 shows another schematic example of how an aircraft trajectory is defined by means of CRAIDS. Figure 4 is almost equivalent to Figure 3, although "Composite 1" 306b in Lateral Thread 306 has been replaced by a "Loop node" 406b.

In the case of the Lateral Thread 406 of Figure 4, the first trigger 406a' establishes the end of validity of the first instruction 406a and the start of validity of the Loop node 406b (which is constituted as a Composite, i.e. it comprises sets of instructions with their corresponding triggers). The Loop 406b then evaluates whether a pre-determined main condition 406bCON (which may either be a fixed condition or a condition pertaining the actual value of a state vector -comprising flight variables- of the air vehicle) is fulfilled. If this main condition 406bCON is not fulfilled, the validity of the Loop 406b ends, and the next instruction 406c (the last instruction for the Lateral Thread shown in Figure 4) of the Lateral Thread 406 starts its validity. If the Loop main condition 406bCON is fulfilled, then the first instruction 406ba of the Loop 406b starts its validity. Once the last instruction 406bbb in the Loop 406b ends its validity, the Loop 406b evaluates once again its condition 406bCON. If it is still fulfilled, the first instruction 406ba in the Loop 406b starts its validity; if the condition 406bCON is not fulfilled, the validity of the Loop 406b ends.

As has been said in the previous paragraph, the Loop Node 406b in the Lateral Thread 406 of Figure 4 is constituted as a composite; the Loop Node 406b includes a series of two instructions 406ba, 406bc with their corresponding two triggers 406ba', 406bc', and it includes in turn another composite node 406bb between the first trigger 406ba' and the last instruction 406bc; the composite 406bb includes a series of two instructions 406bba, 406bbb with their corresponding two triggers 406bba', 406bbb'.

According to CRAIDS, the instructions and triggers included in the Threads, which define the aircraft trajectory, are susceptible of being created, deleted and/or modified, according to user preferences, constraints given and/or any other criteria.

As can be appreciated, the structure of the trajectory definition given by CRAIDS looks like a hierarchical tree, in which the different threads defining the aircraft trajectory are at the same level, and the Composite Nodes, Loop Nodes and/or Conditional Composite Nodes lead to subordinate series of instructions which are at a lower level, thus constituting child nodes.

The Composites (Composite Nodes) are expressed in a so condensed manner because they express groups of instructions which are closely related (e.g. they are intended to perform a particular task such as landing approaches for instance).

Whenever a user wants to delete a particular condition or composite (i.e. he/she wants to avoid that a particular task be performed within a particular thread), this deletion automatically propagates downwards along the child nodes of the hierarchical tree (all the series of instructions pending from a deleted node shall be deleted too), so that all the instructions defining or particularizing a deleted Composite, Conditional Composite and/or Loop are also deleted.

The air vehicle navigation method preferably makes use of a computer storing the aircraft trajectories defined in AIDL by means of CRAIDS structure, the computer allowing a user who accesses the computer, to partially or totally create, modify and/or delete an aircraft trajectory.

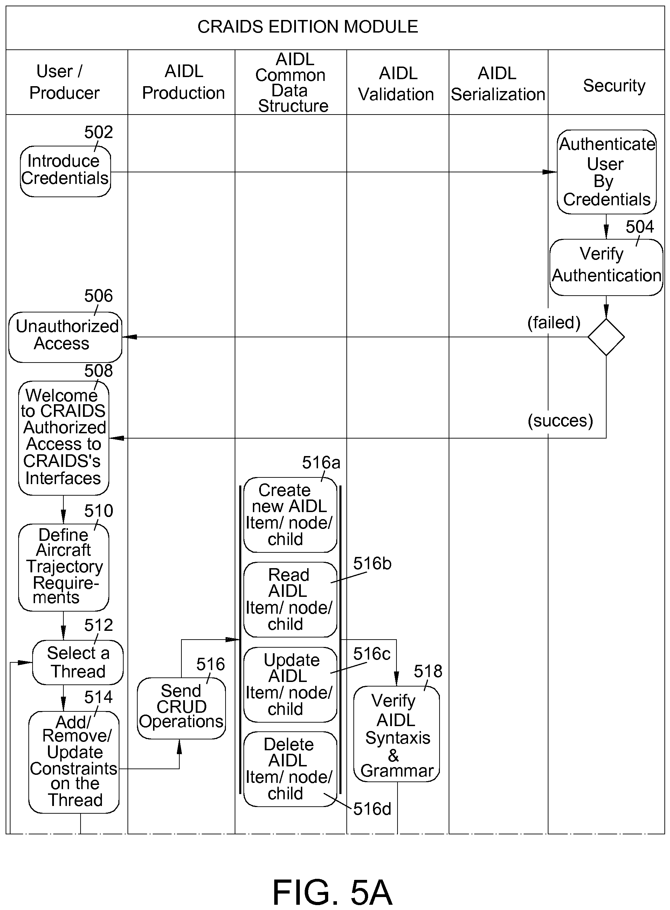

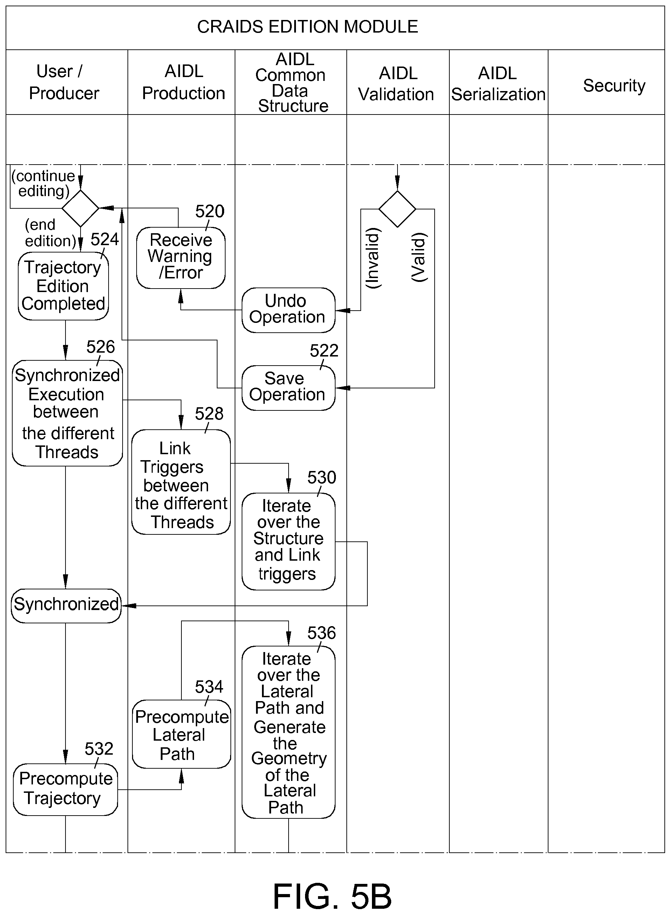

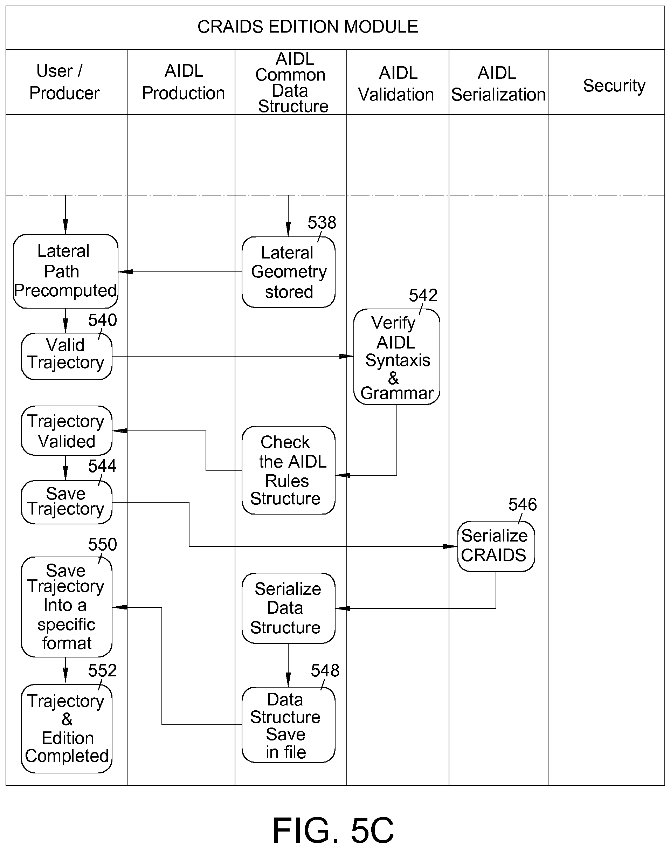

As can be appreciated in Figure 5A, Figure 5B and Figure 5C, according to a preferred embodiment of the air vehicle navigation method, whenever a user of the method wants to create and/or modify an aircraft trajectory, making use of CRAIDS, the user accesses a CRAIDS Edition/Consumption module managing CRAIDS, the module being installed in a computer implementing the present method (the module comprising a User/Producer Interface, an AIDL Production Interface, an AIDL Common Data Structure (CRAIDS) interface, an AIDL validation interface, an AIDL serialization interface and a Security interface), and the following steps are executed:
- The user introduces in the computer his credentials 502 (code or password) in order to access the CRAIDS edition module;
- After verifying 504 the user's credentials, the computer either rejects the user 506 (sending an Unauthorized Access message) if user's credentials do not correspond to an authorized user, or either accepts the user 508 (sending an Authorized Access message);

- If the user has successfully accessed the aircraft trajectory edition module, the user is asked to introduce trajectory requirements 510 (the user is asked to generally indicate whether he/she wishes to modify altitudes, waypoints, aircraft configuration values, etc.); this step corresponds with the step of Definition of Aircraft trajectory requirements 202, shown in Figure 2;
- After being asked to introduce trajectory requirements, the trajectory requirements are introduced by selecting a thread 512 (a particular degree of freedom) for starting with aircraft trajectory edition;
- After selecting a thread, the user is asked to introduce flight constraints 514 (particular values) regarding trajectory requirements (i.e. the user may select Longitudinal Thread 1, for instance, and indicate that the altitude of the flight at a precise along-track distance throughout the flight should be restricted among two values, or should be restricted to a precise value);
- The method then comprises modifying 516 the selected thread that defines the aircraft trajectory according to user's instructions (according to the constraints introduced by the user), in a set of operations arbitrarily named in Figure 5A as CRUD operations (Create 516a, Read 516b, Update 516c, Delete 516d), which either modify, delete or create items/nodes/child nodes (instructions, triggers, composites, conditional composites, loops) in the hierarchical tree with which CRAIDS defines aircraft trajectories; if a constraint introduced by the user involves deleting a node, all the child nodes pending from the previous (deleted) node are deleted too; after making CRUD operations within a particular thread, the method involves verifying syntax and grammar rules 518 concerning AIDL, so as to assess whether the set of instructions making up the selected thread do, as a whole, make sense and satisfy aircraft performance restrictions and flight policies set as a rule in AIDL description language for a particular air vehicle and/or for a particular flight/type of flight; if it is verified that syntax/grammar rules are not complied with, a warning message is displayed 520 (see Figure 5B) and the user must then select again a thread 512 (in this case, the user must select again the same thread in order to overcome syntax/grammar deficiencies) for adding/removing constraints;
- After the user has selected a thread into which he/she wants to make modifications, and once all modifications have been done and its syntax/grammar has been verified and approved, the method comprises saving the operation 522 in a particular file (saving the changes made in the selected thread);
- Once the user has finished 524 editing the threads into which he/she wants to make modifications, the user is asked to introduce synchronization requirements 526 (if he wants to introduce any), indicating times and/or conditions which may link the periods of validity of different instructions among different threads; the method then comprises linking triggers 528 among threads according to user's instructions and iterating over the whole CRAIDS structure 530 linking those triggers which ought to be linked as a consequence of user's instructions;
- Afterwards, the method comprises asking the user whether he/she wishes to pre-compute a trajectory/partial trajectory 532 according to the trajectory defined by the given constraints and instructions; if the user instructs so, the trajectory/partial trajectory is pre-computed 534 (Pre-compute Lateral Path): the method then comprises iterating over the Lateral Thread/Path and generating the geometry of the lateral path (horizontal path) of the trajectory 536 derived from the Lateral Thread, storing in a particular file the generated lateral path 538 (see Figure 5C) and showing it in a display to the user;
- If the user is satisfied with the generated trajectory, the method comprises asking the user to validate the generated trajectory 540, i.e. allow the method to verify 542 whether the generated trajectory defined in AIDL by means of CRAIDS (according to constraints and instructions given by the user) does, as a whole, comply with AIDL grammar and syntax rules. If it does comply with grammar and syntax rules, the method comprises asking the user whether he/she wants to save in a file the generated aircraft trajectory 544; if the user instructs to save the generated trajectory, the method comprises making a serialization 546 of CRAIDS instructions and triggers defining the aircraft trajectory, saving the serialized CRAIDS instructions into a file 548, asking the user whether he/she wants to save the serialized CRAIDS into a specific format 550, and applying the mentioned format to the saved file, thus finishing the editing operations 552. Thanks to the serialization, the hierarchical tree may be re-built and shown to the user whenever the user opens the file where the CRAIDS structure has been saved.

The triggers assess Boolean conditions in order to determine whether the instruction to which a trigger is associated, is valid. Usually, these Boolean conditions pertain to flight variables of the air vehicle's state vector (altitude, speed, acceleration, etc.). For example, a determinate first Boolean condition may regard to an air vehicle's altitude being higher or lower than 1000 m (h > 1.000 m). Thus, if the updated state vector of the air vehicle indicates that the air vehicle's altitude is over 1.000 m, the mentioned first Boolean condition is TRUE, and a first trigger assessing the first Boolean condition would indicate, by means of a signal, that the assessed first Boolean condition is TRUE. Any other component or trigger linked to the first trigger would then receive the signal from the first trigger. Therefore, the first trigger and the triggers linked thereto determine that the instructions associated to them have ended their period of validity, and the next instructions (following those triggers) in each thread shall start their validity.

Many triggers may be linked to one another, within a determinate Thread, or among different Threads. In order to link triggers, according to an exemplary embodiment of the present method, the active object (the trigger to which many others are linked or subscripted) has a Boolean condition associated to a flight variable indicated in the air vehicle's state vector. The passive objects (the triggers linked to the active object) apply for a link to the active object. As an example, let's assume that there is one active object (Trigger1) and two passive objects (Trigger2 and Triggers). Trigger2 and Triggers apply for a link to Trigger1. Trigger1 accepts the petition of Trigger2 and Trigger3, and stores in a list the identifiers and references of Trigger2 and Trigger 3. Whenever Trigger1 assesses that the Boolean condition to which it is associated is TRUE, it goes through the stored list of linked triggers and communicates to them the TRUE assessment by means of a signal. This being done, the linked triggers (Trigger2 and Triggers) also assess that their respective conditions are TRUE, and also activate their corresponding signals. This way, the assessment of a Boolean condition associated to a determinate flight variable may propagate through the entire CRAIDS hierarchical tree, activating different triggers which lead to the start of validity of different instructions in one or more threads.

There are commonly 6 maximum threads (6 maximum degrees of freedom) defining the aircraft's motion and so, the aircraft's trajectory.

As has already been introduced, the method comprises, according to a preferred embodiment thereof, pre-computing a partial trajectory of the Lateral Thread (which mainly define purely geometric instructions as straight or curved lines to follow a trajectory). This trajectory pre-computation leads to a considerable time saving since an a-priori knowledge of how an aircraft trajectory will look like is gained.

A possible embodiment of a trajectory computation/pre-computation algorithm comprises:
- Going through the Lateral Thread searching for those instructions that only define a geometry (Lateral Path Law, LPL), and copying said instructions in a list. If a Hold Course instruction (a Hold Course instruction is a discontinuity that holds the current aircraft's course until its validity ends, the validity of which may depend on another air vehicle's flight variable) is found among two instructions in the Lateral Thread, then this discontinuity is marked on the generated/computed partial trajectory by means of a tag. If a bifurcation (a Conditional Composite) is found within the Lateral Thread, a new list is created with the purpose of keeping two alternative lists representing the bifurcation. The result is an ensemble of lists where only geometric instructions are kept.
- Once the lists containing only geometric instructions are created, the algorithm goes through each of these lists and solves the geometric issues associated to the instructions, thus creating and depicting the different geometric objects. The geometric objects define a succession of spots defining, in a horizontal plane, the waypoints along which the aircraft is to fly. The geometric objects are stored in a different list constituting the computed Lateral Path.
- Each element upon the Lateral Path (which represents a geometric object and therefore a trajectory segment) is associated to its corresponding instruction. By means of this association, the different systems making use of CRAIDS may further compute/execute a geometric instruction accessing to its corresponding geometric object whose geometric solution has already been solved.

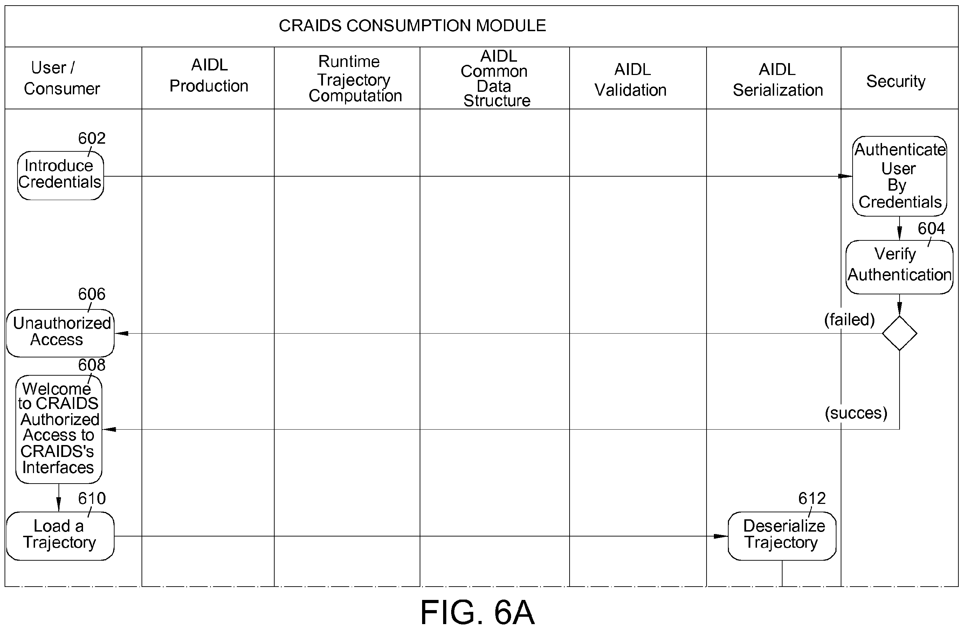

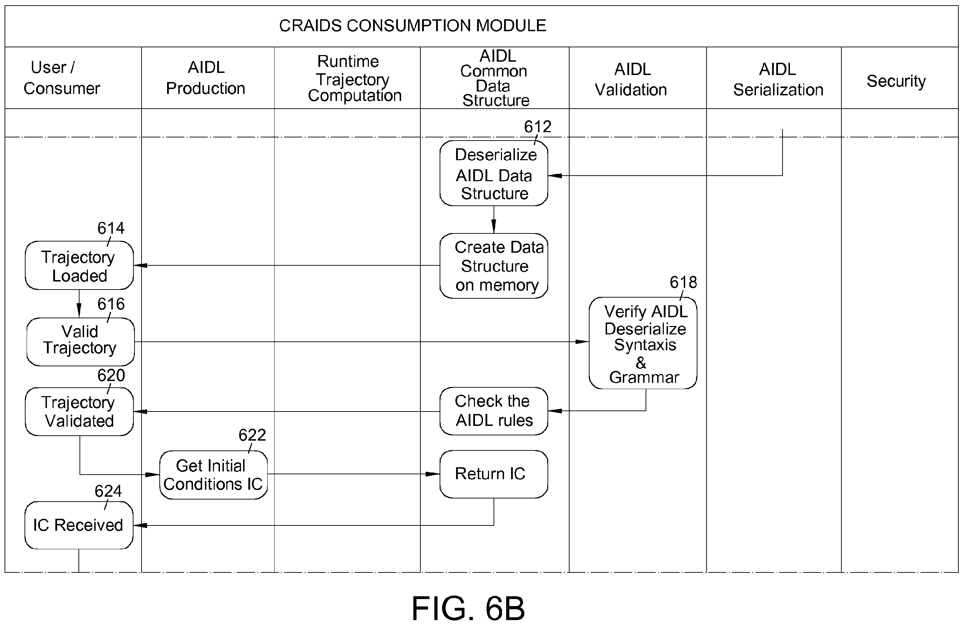

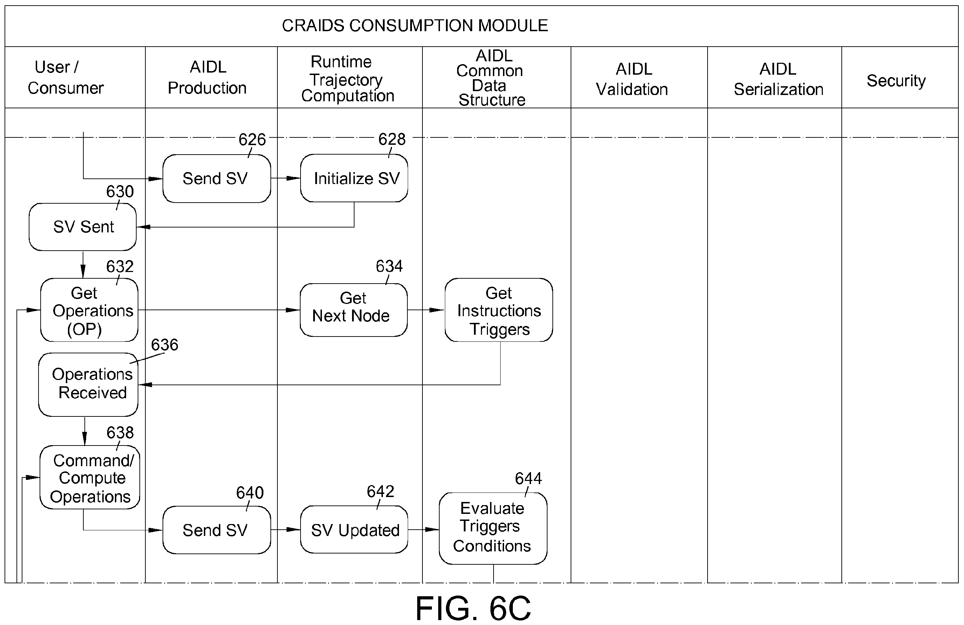

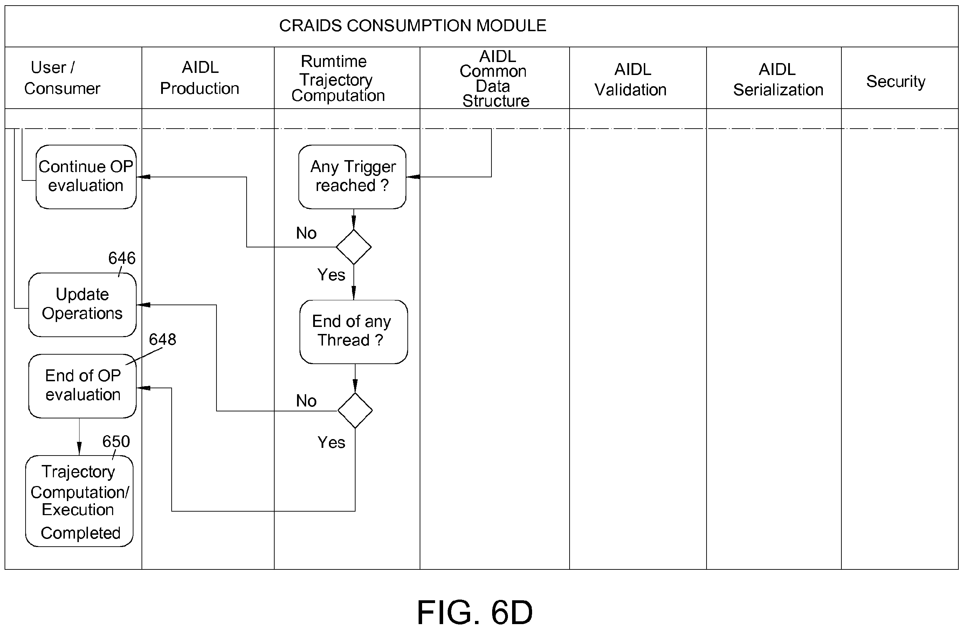

According to a preferred embodiment of the air vehicle navigation method, whenever a user of the method wants to make use of an aircraft trajectory, created and/or modified as explained with reference to Figure 5A, Figure 5B and Figure 5C, making use of CRAIDS, the user/consumer accesses a CRAIDS Edition/Consumption module, the module being installed in a computer implementing the present method (wherein the module typically comprises a User/Consumer interface, an AIDL Production interface, a Runtime Trajectory Computation interface, an AIDL Common Data Structure (CRAIDS) interface, an AIDL validation interface, an AIDL Serialization interface and a Security interface), and the following steps shown in Figure 6A, Figure 6B, Figure 6C and Figure 6D are executed:
- The user introduces in the computer his credentials 602 (code or password) in order to access the CRAIDS consumption module;
- After verifying the user's credentials 604, the computer either rejects the user 606 (sending an Unauthorized Access message) if user's credentials do not correspond to an authorized user, or either accepts the user 608 (sending an Authorized Access message);
- If the user has successfully accessed the CRAIDS consumption module, the user is asked to select a trajectory based on AIDL description language, and load it in computer's memory 610. For doing this, the user may select a file where a serialized aircraft trajectory has been saved. The trajectory and AIDL data structure is deserialized 612 for it to be loaded in computers memory;
- Once the selected trajectory has been loaded in computer's memory 614 (see Figure 6B), the user is asked to start validation of the trajectory 616 and the consumption module validates syntax and grammar of the AIDL language 618, so as to verify whether the instructions defining the aircraft's trajectory are coherent, and there are no missing instructions for completely defining the trajectory. With the trajectory validated 620 and loaded in computer's memory, different consumption systems or modules (such as Trajectory Prediction, TP, or Flight Control, FC) may compute/pre-compute the resulting trajectory, by accessing a common Interface named Runtime Trajectory Computation (RTC);
- The initial conditions for a flight are solicited 622 and received 624 by a user/consumer system, which in turn sends a request 626 (see Figure 6C) to receive the updated state vector with the current values of the air vehicle to the CRAIDS consumption module. The state vector is then initialized 628 by CRAIDS consumption module and sent 630 to the user/consumer system;
- The user then makes a request to get the operations necessary to perform the loaded trajectory 632; CRAIDS consumption module iterates through the CRAIDS hierarchical tree structure getting the next nodes 634 comprising instructions and triggers which, as a whole, constitute the different operations to be performed by an air vehicle so that the air vehicle follows a trajectory;
- Once the user/consumer system has received the operations 636, it starts the computation of a trajectory and/or it commands 638 the air vehicle to perform the received operations so as to follow the trajectory specified by CRAIDS (depending on the type of consumer system or module, it respectively computes a trajectory -Trajectory Prediction module, TP- or commands -Flight Control module, FC- the air vehicle);
- Whether the consumer system computes a trajectory or commands the air vehicle to follow a trajectory, the consumer system sends the updated values of the state vector 640 of the air vehicle to the CRAIDS consumption module, while the ongoing operation is being executed; once the CRAIDS consumption module updates the air vehicle's state vector 642, it evaluates the conditions 644 associated to the nodes of the CRAIDS hierarchical tree (triggers and conditional nodes or loop nodes); if any trigger within a particular thread defining the aircraft trajectory has been reached (see Figure 6D), then the CRAIDS consumption module evaluates whether that particular thread has ended; if no trigger has been reached, the consumer system keeps executing/computing the ongoing operation;
- If a trigger is reached within any of the threads defining the aircraft trajectory, but it is still not the end of that particular thread, the user/consumer system updates the ongoing operations 646 and makes a new request 632 to get new operations; if the reached trigger is at the end of a particular thread, then the CRAIDS consumption module sends to the user/consumer system an end of evaluation message 648, and the trajectory computation and/or execution is completed 650.

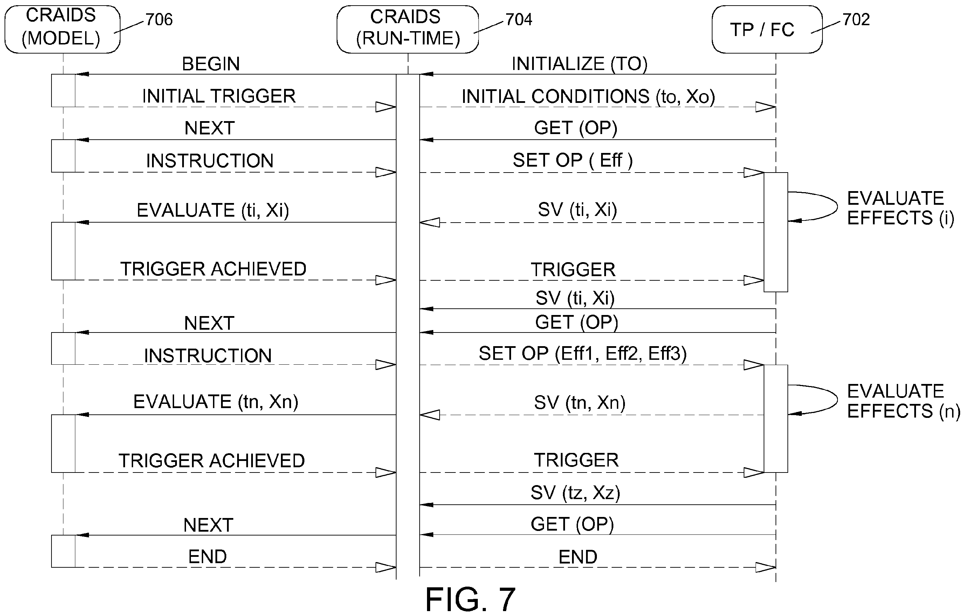

Figure 7 schematically depicts the steps involved in the computation/execution process of an aircraft trajectory, according to a particular embodiment of the present method. These steps may be described as follows:
1. FC/TP systems 702 ask CRAIDS common interface 704 (CRAIDS Runtime or Runtime Trajectory Computation, RTC) for the initial conditions of the air vehicle (Initial conditions at initial time, t₀ and location vector, *̅x̅*̅₀̅), according to a particular CRAIDS Model 706 of a particular trajectory. FC/TP initialize and update their initial conditions with the values given by CRAIDS common interface.
2. FC/TP update an air vehicle's state vector (SV) with the initial conditions given by CRAIDS common interface, and send this state vector to CRAIDS common interface; CRAIDS common interface initializes its internal state vector, according to the state vector values provided by FC/TP.
3. FC/TP ask CRAIDS common interface for the first active (valid) operation (OP), i.e. the ensemble of active (valid) instructions for each and every of the threads defining all the degrees of freedom of the air vehicle; with this ensemble of active instructions, FC/TP get the different applicable effects (one effect, "Eff", for each degree of freedom -thread- for the aircraft), which univocally define aircraft's flight intent and aircraft's trajectory.
4. CRAIDS common interface receives the petition from FC/TP and searches along each thread of CRAIDS hierarchical tree, which are the first/next nodes. For this purpose, CRAIDS common interface has one iterating pointer for each thread which keeps the location of the node to which it points. The iterating pointer moves forward along each thread, as it receives new petitions from the FC/TP, and always keeps the location of the last node it has been asked for.
   a. If the node is an instruction, the instruction is copied, together with its associated trigger, in order to conform an active operation. The iterating pointer then moves forward to the next node in the thread, i.e. the next trigger.
   b. If the node is a Composite, the iterating pointer moves forward until it reaches the next instruction, and the same actions described in previous item "a" are performed.
   c. If the node is a bifurcation (Conditional Composite), CRAIDS common interface evaluates its associated Boolean condition and, depending on whether it is TRUE or FALSE, the iterating pointer moves forward along either branch of the bifurcation, until it reaches the first instruction in that branch; then, the same actions described in previous item "a" are performed.
   d. If the node is a Loop, the Boolean condition associated to the Loop is assessed first; if the result of this assessment is TRUE, the iterating pointer jumps into the Loop searching for the first instruction, and the actions described in item "a" are performed; if the pointer is already inside a Loop and reaches the last node of the Loop, the Boolean condition associated to the Loop is assessed again, in order to determine whether the Loop must be re-initialized or the pointer may jump out from the Loop, searching for the next node in the thread.
   At the end of these operations, CRAIDS common interface has found a set of instructions with their associated triggers. For the external systems (FC/TP), the data structure provided by CRAIDS common interface is linear, that is, the external systems interpret CRAIDS as a temporal succession of operations (by doing this, the complexity of CRAIDS structure, with its composites, loops and bifurcations, remains hidden to the external systems). The external systems are only aware of a linear list of commands representing operations to be performed by the air vehicle.
5. CRAIDS common interface outputs a set of active operations with their associated effects (set OP(Eff1, Eff2, Eff3,...)) to the external systems. The external systems start to compute/ command said operations in a continuous manner, until they receive a communication from the CRAIDS common interface that an instruction conforming an operation is no longer valid, this being indicated by the signal of the trigger associated to that instruction. While the operations and their associated effects are being performed, the external systems continuously update the air vehicle's state vector at different times and location vectors, SV(tᵢ, *̅x̅ᵢ̅*̅) and send it to CRAIDS common interface. The air vehicle's state vector is important, since most of the conditions (and the triggers, which can be regarded as condition assessors) base their assessment on the values taken by the flight variables in the state vector.
6. CRAIDS common interface updates its state vector and evaluates the conditions of the active triggers (the triggers to which the iterating pointers are pointing at each moment) in order to assess the validity of an instruction.
7. If the external systems are informed that the condition of one of the triggers is fulfilled, then the external systems ask again CRAIDS common interface for a next operation (and the actions described in previous item 4 are performed once again); otherwise, the systems keep on assessing the ongoing operations (previous item 5) and updating air vehicle's state vector at different times and locations (SV(tₙ, xₙ)).
8. Once the end of a thread is reached, and the condition of the trigger associated to the last instruction in the thread is fulfilled, CRAIDS common interface cannot provide further instructions to the external systems, so the computation/pre-computation/execution process ends.

As a result of the computation process, FC has executed/commanded a trajectory, and TP has predicted another trajectory. The two main trajectory consumers, the TP (whose aim is to predict a trajectory in the course of flight planning for Air Traffic Management -ATM-) and the FC (Flight Control, whose aim is execute and command the air vehicle in order to follow a trajectory) interact with CRAIDS common interface for interpreting AIDL description language as a linear succession of effects over the air vehicle (instructions) and conditions (triggers) which activate the end of the effect and specify the period of validity of such effects.

The computer implementing the methods described in the present disclosure may be associated with a conventional flight simulator. In turn, the computer may include a processor and a memory for a computer program, that when executed causes the processor to operate in accordance with the methods described herein. The computer program may also be embodied in a computer readable medium having stored therein the computer program.

## Claims

1. An air vehicle navigation method via a common runtime aircraft intent data structure, the method comprising the following steps:
a) establishing initial conditions for an air vehicle flight;
b) establishing flight constraints;
c) editing an aircraft trajectory based on the initial conditions and flight constraints, wherein the aircraft trajectory is defined in Aircraft Intent Description Language, AIDL, wherein AIDL is a formal language, and;
d) flying the air vehicle according to the edited aircraft trajectory;
**wherein** the step of editing an aircraft trajectory comprises:
i) determining a number of degrees of freedom for flying the air vehicle;
ii) establishing as many trajectory threads (302, 402, 304, 404, 306, 406, 308, 408) as degrees of freedom, wherein each trajectory thread comprises a series of instruction nodes (302a, 302b, 402a, 402b, 304a, 304c, 306a, 406a, 306c, 406c) comprising instructions which univocally define how to fly the air vehicle according to a degree of freedom;
iii) determining, for each trajectory thread, the instructions satisfying the flight constraints;
iv) determining the validity of each instruction in each thread, wherein the validity refers to any combination of one or more of at least:
a. a specific period of time;
b. a value or range of values concerning a flight variable, and;
c. a validity of another instruction of either the same or another thread;
v) establishing a trigger node (302a', 402a', 302b', 402b', 304a', 304c', 306a', 406a', 306c', 406c'), comprising a trigger, associated to each instruction node in each thread, wherein each trigger determines the end of validity of the instruction to which it is associated and the start of validity of the next instruction within the thread, and;
vi) sequencing the instructions and associated triggers in each thread, so that when flying the air vehicle according to the instructions in their specified sequence, the air vehicle satisfies all the flight constraints at every stage throughout the flight;
wherein the step of editing an aircraft trajectory is carried out by means of a common runtime aircraft intent data structure, wherein the common runtime structure defines aircraft trajectories for a plurality of modules involved in air vehicle's trajectory definition and execution,
**characterized in that** each thread defines a branch of a hierarchical tree, the hierarchical tree comprising a root node defining the aircraft trajectory, wherein the branches defined by each thread directly derive from the root node, such that each branch defines the aircraft trajectory according to a different degree of freedom;
wherein at least one instruction node upon at least one thread of the aircraft trajectory is a composite node (306b) comprising a set of instruction nodes (306ba, 306bc) with their associated trigger nodes (306ba', 306bc'), wherein:
a. fulfillment of a condition associated to a trigger (306ba') in the thread (306) which immediately precedes the composite node (306b) starts the validity of the first instruction (306ba) of the composite node, and;
b. fulfillment of a condition of a trigger (306bc') in the composite node (306b) which is associated to the last instruction (306bc) in the composite node starts the validity of the instruction (306c) in the thread (306) which immediately follows the composite node;
wherein deletion of a node in a thread involves deleting all sets of instruction nodes comprised within the deleted node.

2. The air vehicle navigation method according to claim 1, **wherein** the step of flying the air vehicle according to the edited aircraft trajectory comprises:
a. computing the edited aircraft trajectory, this leading to a set of operations to be performed by the air vehicle, and;
b. commanding the air vehicle to execute the set of operations;
wherein computation of the edited aircraft trajectory is a process which, at each stage of the flight, comprises:
- updating air vehicle's state vector;
- assessing, according to the air vehicle's state vector, which instructions in each thread are still valid, wherein this assessment includes evaluating triggers and conditions in each thread, and;
- determining the operations to be performed so that, when executed by the air vehicle, the air vehicle flies according to the instructions still valid.

3. The air vehicle navigation method according to claim 2, **wherein** computing the aircraft trajectory comprises:
a) obtaining air vehicle's initial conditions (622);
b) determining a first operation within the list of operations (632), wherein the first operation comprises first instructions in each and every of the threads, and effects associated to these instructions;
c) updating (642) an air vehicle's state vector while the first operation is performed, wherein the air vehicle's state vector comprises flight related variables;
d) assessing, according to the air vehicle's state vector, which instructions in each thread are still valid (644);
e) determining next operations (646) within the list of operations, wherein a next operation within the list of operations comprises all the instructions still valid at a given stage of the aircraft trajectory, and the effects associated to these valid instructions, and;
f) ending trajectory computation (650) when, at a given stage of the flight trajectory, no instructions upon any of the threads are still valid.

4. The air vehicle navigation method according to claim 1, **wherein** it comprises verifying aircraft intent description language syntax of the instructions comprising at least one of the threads of the edited trajectory, to ensure that aircraft performance limitations are respected, that all the instructions are feasible and are coherent with one another, and that the threads are complete.

5. The air vehicle navigation method according to claim 1, **wherein** at least one instruction node upon at least one thread of the aircraft trajectory is a conditional composite node (304b) comprising at least two sets of instruction nodes with their associated trigger nodes, wherein:
a. start of validity of either set of instruction nodes of the conditional composite node is subjected to the fulfillment of a condition (304bCON) of the conditional composite node (304b);
b. the fulfillment of the condition associated to the trigger (304a') in the thread (304) which immediately precedes the conditional composite node (304b) starts the assessment of the condition (304bCON) of the conditional composite node (304b), and:
c. the fulfillment of the condition of a trigger (304b1', 304b2') in the conditional composite node (304b) which is associated to the last instruction (304b1, 304b2b) in either set of instructions of the conditional composite node starts the validity of the instruction (304c) in the thread (304) which immediately follows the conditional composite node.

6. The air vehicle navigation method according to claim 1, **wherein** at least one instruction node upon at least one thread of the aircraft trajectory is a loop node (406b) comprising a set of instruction nodes (406ba, 406bc) with their associated trigger nodes (406ba', 406bc'), wherein:
a. fulfillment of the condition associated to the trigger (406a') in the thread (406) which immediately precedes the loop node (406b) starts the assessment of a main condition (406bCON) of the loop node;
b. start of validity of the first instruction (406ba) of the set of instructions comprising the loop node is subjected to the fulfillment of the main condition of the loop node;
c. if the main condition of the loop node is not fulfilled, the validity of the loop node ends and the instruction (406c) in the thread immediately following the loop node starts its validity, and;
d. fulfillment of a condition of a trigger node (406bc') which is associated to the last instruction node (406bc) in the set of instruction nodes comprising the loop node starts the assessment of the main condition (406bCON) of the loop node.

7. The air vehicle navigation method according to claim 1, **wherein** at least one thread comprises instructions to univocally define aircraft's motion in a vertical plane.

8. The air vehicle navigation method according to claim 1, **wherein** at least one thread comprises instructions to univocally define aircraft's motion in a horizontal plane.

9. The air vehicle navigation method according to claim 1, **wherein** at least one thread comprises instructions to univocally define aircraft's specific maneuvers at each stage of the flight.

10. The air vehicle navigation method according to claim 1, **wherein** at least one thread comprises instructions to univocally define aircraft's speed and acceleration.

11. The air vehicle navigation method according to claim 1, **wherein** activation of a trigger establishes the end of validity of the instruction to which the trigger is associated and the start of validity of an instruction in a thread immediately following the trigger, wherein activation of the trigger is subjected to a fulfillment of a condition specified by the trigger and/or to the activation of another trigger associated to another instruction in any thread.

12. A computer readable medium comprising instructions which, when executed by a computer, cause the computer to carry out the method described in claims 1 to 11.

## Patentansprüche

1. Luftfahrzeugnavigationsverfahren über eine gemeinsame Laufzeitabsichtsdatenstruktur eines Flugzeugs, wobei das Verfahren folgende Schritte umfasst:
a) Etablieren von Anfangsbedingungen für den Flug eines Luftfahrzeugs;
b) Etablieren von Flugbeschränkungen;
c) Editieren einer Flugzeugflugbahn basierend auf den Anfangsbedingungen und Flugbeschränkungen, wobei die Flugzeugflugbahn in der *Aircraft Intent Description Language*, AIDL, definiert ist, wobei AIDL eine formale Sprache ist, und;
d) Fliegen des Luftfahrzeugs nach der editierten Flugzeugflugbahn;
wobei der Schritt des Editierens einer Flugzeugflugbahn Folgendes umfasst:
i) Bestimmen einer Anzahl von Freiheitsgraden zum Fliegen des Luftfahrzeugs;
ii) Etablieren so vieler Flugbahnstränge (302, 402, 304, 404, 306, 406, 308, 408) wie Freiheitsgrade, wobei jeder Flugbahnstrang eine Reihe von Anweisungsknoten (302a, 302b, 402a, 402b, 304a, 304c, 306a, 406a, 306c, 406c) umfasst, die Anweisungen umfassen, die eindeutig definieren, wie das Luftfahrzeug nach einem Freiheitsgrad zu fliegen ist;
iii) Bestimmen der Anweisungen, die die Flugbeschränkungen erfüllen, für jeden Flugbahnstrang;
iv) Bestimmen der Gültigkeit jeder Anweisung in jedem Strang, wobei sich die Gültigkeit auf eine beliebige Kombination von mindestens einem oder mehreren von Folgendem bezieht:
a. einer spezifischen Zeitperiode;
b. einen Wert oder einen Bereich von Werten bezüglich einer Flugvariablen, und;
c. einer Gültigkeit einer anderen Anweisung entweder desselben oder eines anderen Strangs;
v) Etablieren eines Triggerknotens (302a', 402a', 302b', 402b', 304a', 304c', 306a', 406a', 306c', 406c'), der einen Trigger umfasst, der mit jedem Anweisungsknoten in jedem Strang assoziiert ist, wobei jeder Trigger das Ende der Gültigkeit der Anweisung, mit der er assoziiert ist, und den Beginn der Gültigkeit der nächsten Anweisung innerhalb des Strangs bestimmt, und;
vi) Sequenzieren der Anweisungen und assoziierten Trigger in jedem Strang, so dass, wenn das Luftfahrzeug nach den Anweisungen in ihrer spezifizierten Sequenz fliegt, das Luftfahrzeug alle Flugbeschränkungen in jeder Phase während des Fluges erfüllt;
wobei der Schritt des Editierens einer Flugzeugflugbahn mittels einer gemeinsamen Laufzeitabsichtsdatenstruktur eines Flugzeugs durchgeführt wird, wobei die gemeinsame Laufzeitdatenstruktur Flugzeugflugbahnen für eine Vielzahl von Modulen definiert, die an der Definition und Ausführung der Luftfahrzeugflugbahn beteiligt sind,
**dadurch gekennzeichnet, dass** jeder Strang eine Verzweigung eines hierarchischen Baums definiert, wobei der hierarchische Baum einen Wurzelknoten umfasst, der die Flugzeugflugbahn definiert, wobei die von jedem Strang definierten Verzweigungen direkt von dem Wurzelknoten stammen, so dass jede Verzweigung die Flugzeugflugbahn nach einem unterschiedlichen Freiheitsgrad definiert;
wobei mindestens ein Anweisungsknoten auf mindestens einem Strang der Flugzeugflugbahn ein Verbundknoten (306b) ist, der einen Satz von Anweisungsknoten (306ba, 306bc) mit ihren assoziierten Triggerknoten (306ba', 306bc') umfasst, wobei:
a. die Erfüllung einer einem Trigger (306ba') assoziierten Bedingung in dem Strang (306), der dem Verbundknoten (306b) unmittelbar vorhergeht, die Gültigkeit der ersten Anweisung (306ba) des Verbundknotens startet, und;
b. die Erfüllung einer Bedingung eines Triggers (306bc') in dem Verbundknoten (306b), der mit der letzten Anweisung (306bc) in dem Verbundknoten assoziiert ist, die Gültigkeit der Anweisung (306c) in dem Strang (306) startet, der dem Verbundknoten unmittelbar folgt;
wobei das Löschen eines Knotens in einem Strang das Löschen aller Sätze von Anweisungsknoten beinhaltet, die innerhalb des gelöschten Knotens umfasst sind.

2. Luftfahrzeugnavigationsverfahren nach Anspruch 1, wobei der Schritt des Fliegens des Luftfahrzeugs nach der editierten Flugzeugflugbahn Folgendes umfasst:
a. Berechnen der editierten Flugzeugflugbahn, was zu einem Satz von Operationen führt, die von dem Luftfahrzeug durchzuführen sind, und;
b. Befehlen dem Luftfahrzeug, den Satz von Operationen auszuführen;
wobei das Berechnen der editierten Flugzeugflugbahn ein Prozess ist, der in jeder Phase des Fluges Folgendes umfasst:
- Aktualisieren des Statusvektors des Luftfahrzeugs;
- Beurteilen, nach dem Statusvektor des Luftfahrzeugs, welche Anweisungen in jedem Strang noch gültig sind, wobei diese Beurteilung das Bewerten von Triggern und Bedingungen in jedem Strang einschließt, und;
- Bestimmen der durchzuführenden Operationen, so dass bei Ausführung durch das Luftfahrzeug das Luftfahrzeug nach den noch gültigen Anweisungen fliegt.

3. Luftfahrzeugnavigationsverfahren nach Anspruch 2, wobei das Berechnen der Flugzeugflugbahn Folgendes umfasst:
a) Erhalten der Anfangsbedingungen des Luftfahrzeugs (622);
b) Bestimmen einer ersten Operation innerhalb der Liste von Operationen (632), wobei die erste Operation erste Anweisungen in jedem einzelnen Strang und mit diesen Anweisungen assoziierte Effekte umfasst;
c) Aktualisieren (642) eines Statusvektors eines Luftfahrzeugs, während die erste Operation durchgeführt wird, wobei der Statusvektor des Luftfahrzeugs flugbezogene Variablen umfasst;
d) Beurteilen, nach dem Statusvektor des Luftfahrzeugs, welche Anweisungen in jedem Strang noch gültig sind (644);
e) Bestimmen nächster Operationen (646) innerhalb der Liste von Operationen, wobei eine nächste Operation innerhalb der Liste von Operationen alle Anweisungen, die in einer gegebenen Phase der Flugzeugflugbahn noch gültig sind, und die mit diesen gültigen Anweisungen assoziierten Effekte umfasst, und;
f) Beenden der Flugbahnberechnung (650), wenn in einer gegebenen Phase der Flugbahn keine Anweisungen auf irgendeinem der Stränge noch gültig sind.

4. Luftfahrzeugnavigationsverfahren nach Anspruch 1, wobei es das Verifizieren der Flugzeugabsichtbeschreibungssprachesyntax der Anweisungen umfasst, die mindestens einen der Stränge der editierten Flugbahn umfassen, um sicherzustellen, dass die Leistungsbegrenzungen des Flugzeugs eingehalten werden, dass alle Anweisungen realisierbar sind und miteinander kohärent sind und dass die Stränge vollständig sind.

5. Luftfahrzeugnavigationsverfahren nach Anspruch 1, wobei mindestens ein Anweisungsknoten auf mindestens einem Strang der Flugzeugflugbahn ein bedingter Verbundknoten (304b) ist, der mindestens zwei Sätze von Anweisungsknoten mit ihren assoziierten Triggerknoten umfasst, wobei:
a. der Start der Gültigkeit eines der beiden Sätze von Anweisungsknoten des bedingten Verbundknotens der Erfüllung einer Bedingung (304bCON) des bedingten Verbundknotens (304b) unterworfen ist;
b. die Erfüllung der mit dem Trigger (304a') assoziierten Bedingung in dem Strang (304), der dem bedingten Verbundknoten (304b) unmittelbar vorhergeht, die Beurteilung der Bedingung (304bCON) des bedingten Verbundknotens (304b) startet, und:
c. die Erfüllung der Bedingung eines Triggers (304b1', 304b2') im bedingten Verbundknoten (304b), der mit der letzten Anweisung (304b1, 304b2b) in einem der beiden Anweisungssätze des bedingten Verbundknotens assoziiert ist, die Gültigkeit der Anweisung (304c) in dem Strang (304) startet, der unmittelbar auf den bedingten Verbundknoten folgt.

6. Luftfahrzeugnavigationsverfahren nach Anspruch 1, wobei mindestens ein Anweisungsknoten auf mindestens einem Strang der Flugzeugflugbahn ein Schleifenknoten (406b) ist, der einen Satz von Anweisungsknoten (406ba, 406bc) mit ihren assoziierten Triggerknoten (406ba', 406bc') umfasst, wobei:
a. die Erfüllung der dem Trigger (406a') assoziierten Bedingung in dem Strang (406), der dem Schleifenknoten (406b) unmittelbar vorhergeht, die Beurteilung einer Hauptbedingung (406bCON) des Schleifenknotens startet;
b. der Beginn der Gültigkeit der ersten Anweisung (406ba) des Anweisungssatzes, der den Schleifenknoten umfasst, der Erfüllung der Hauptbedingung des Schleifenknotens unterworfen ist;
c. wenn die Hauptbedingung des Schleifenknotens nicht erfüllt ist, endet die Gültigkeit des Schleifenknotens und die Anweisung (406c) in dem Strang, der dem Schleifenknoten unmittelbar folgt, startet ihre Gültigkeit, und;
d. die Erfüllung einer Bedingung eines Triggerknotens (406bc'), der dem letzten Anweisungsknoten (406bc) in dem Satz von Anweisungsknoten, die den Schleifenknoten umfassen, assoziiert ist, startet die Beurteilung der Hauptbedingung (406bCON) des Schleifenknotens.

7. Luftfahrzeugnavigationsverfahren nach Anspruch 1, wobei mindestens ein Strang Anweisungen zum eindeutigen Definieren der Bewegung des Flugzeugs in einer vertikalen Ebene umfasst.

8. Luftfahrzeugnavigationsverfahren nach Anspruch 1, wobei mindestens ein Strang Anweisungen zum eindeutigen Definieren der Bewegung des Flugzeugs in einer horizontalen Ebene umfasst.

9. Luftfahrzeugnavigationsverfahren nach Anspruch 1, wobei mindestens ein Strang Anweisungen zum eindeutigen Definieren spezifischer Manöver des Flugzeugs in jeder Phase des Fluges umfasst.

10. Luftfahrzeugnavigationsverfahren nach Anspruch 1, wobei mindestens ein Strang Anweisungen zum eindeutigen Definieren der Geschwindigkeit und Beschleunigung des Flugzeugs umfasst.

11. Luftfahrzeugnavigationsverfahren nach Anspruch 1, wobei das Aktivieren eines Triggers das Ende der Gültigkeit der Anweisung, mit der der Trigger assoziiert ist, und den Beginn der Gültigkeit einer Anweisung in einem dem Trigger unmittelbar folgenden Strang etabliert, wobei das Aktivieren des Triggers der Erfüllung einer durch den Trigger spezifizierten Bedingung und/oder der Aktivierung eines anderen Triggers unterworfen ist, der einer anderen Anweisung in einem beliebigen Strang assoziiert ist.

12. Computerlesbares Medium, das Anweisungen umfasst, die, wenn sie von einem Computer ausgeführt werden, den Computer veranlassen, das in den Ansprüchen 1 bis 11 beschriebene Verfahren durchzuführen.

## Revendications

1. Procédé de navigation d'un véhicule aérien par l'intermédiaire d'une structure de données commune d'intention de temps d'exécution d'aéronef, le procédé comprenant les étapes suivantes :
a) établir des conditions initiales pour un vol de véhicule aérien ;
b) établir des contraintes de vol ;
c) éditer une trajectoire d'aéronef en fonction des conditions initiales et des contraintes de vol, dans lequel la trajectoire d'aéronef est définie dans un langage de description d'intention d'aéronef, AIDL, dans lequel AIDL est un langage formel, et ;
d) piloter le véhicule aérien selon la trajectoire d'aéronef éditée ;
dans lequel l'étape d'éditer une trajectoire d'aéronef comprend :
i) déterminer un nombre de degrés de liberté pour piloter le véhicule aérien ;
ii) établir autant de fils de trajectoire (302, 402, 304, 404, 306, 406, 308, 408) que de degrés de liberté, dans lequel chaque fil de trajectoire comprend une série de noeuds d'instructions (302a, 302b, 402a, 402b, 304a, 304c, 306a, 406a, 306c, 406c) comprenant des instructions qui définissent de manière univoque comment piloter le véhicule aérien selon un degré de liberté ;
iii) déterminer, pour chaque fil de trajectoire, les instructions satisfaisant les contraintes de vol ;
iv) déterminer la validité de chaque instruction dans chaque fil, dans lequel la validité fait référence à toute combinaison d'un ou plusieurs d'au moins :
a. une période de temps spécifique ;
b. une valeur ou une plage de valeurs concernant une variable de vol, et ;
c. une validité d'une autre instruction du même fil ou d'un autre fil ;
v) établir un noeud déclencheur (302a', 402a', 302b', 402b', 304a', 304c', 306a', 406a', 306c', 406c'), comprenant un déclencheur, associé à chaque noeud d'instructions dans chaque fil, dans lequel chaque déclencheur détermine la fin de validité de l'instruction à laquelle il est associé et le début de validité de l'instruction suivante dans le fil, et ;
vi) séquencer les instructions et les déclencheurs associés dans chaque fil, de sorte que, lors du pilotage du véhicule aérien selon les instructions dans leur séquence spécifiée, le véhicule aérien satisfait toutes les contraintes de vol dans toutes les stades tout au long du vol ;
dans lequel l'étape d'éditer une trajectoire d'aéronef est mise en oeuvre au moyen d'une structure de données commune d'intention de temps d'exécution d'aéronef, dans lequel la structure commune de temps d'exécution définit des trajectoires d'aéronef pour une pluralité de modules impliqués dans la définition et l'exécution de trajectoires du véhicule aérien,
**caractérisé en ce que** chaque fil définie une branche d'un arbre hiérarchique, l'arbre hiérarchique comprenant un noeud racine définissant la trajectoire d'aéronef, dans lequel les branches définies par chaque fil dérivent directement du noeud racine, de sorte que chaque branche définit la trajectoire d'aéronef selon un degré de liberté différent ;
dans lequel au moins un noeud d'instructions sur au moins un fil de la trajectoire d'aéronef est un noeud composite (306b) comprenant un ensemble de noeuds d'instructions (306ba, 306bc) avec leurs noeuds déclencheurs associés (306ba', 306bc'), dans lequel :
a. remplir une condition associée à un déclencheur (306ba') dans le fil (306) qui précède immédiatement le noeud composite (306b) démarre la validité de la première instruction (306ba) du noeud composite, et ;
b. remplir une condition d'un déclencheur (306bc') dans le noeud composite (306b) qui est associé à la dernière instruction (306bc) dans le noeud composite démarre la validité de l'instruction (306c) dans le fil (306) qui suit immédiatement le noeud composite ;
dans lequel la suppression d'un noeud dans un fil implique la suppression de tous les ensembles de noeuds d'instructions compris dans le noeud supprimé.

2. Procédé de navigation d'un véhicule aérien selon la revendication 1, dans lequel l'étape de piloter le véhicule aérien selon la trajectoire d'aéronef éditée comprend :
a. calculer la trajectoire d'aéronef éditée, de qui conduit à un ensemble d'opérations à effectuer par le véhicule aérien, et ;
b. contrôler le véhicule aérien pour exécuter l'ensemble d'opérations ;
dans lequel le calcul de la trajectoire d'aéronef éditée est un processus qui comprend, à chaque stade du vol :
- mettre à jour le vecteur d'état du véhicule aérien ;
- évaluer, selon le vecteur d'état du véhicule aérien, quelles instructions dans chaque fil sont encore valables, dans lequel cet évaluation comporte évaluer des déclencheurs et des conditions dans chaque fil, et ;
- déterminer les opérations à effectuer de sorte que, lorsqu'elles sont exécutées par le véhicule aérien, le véhicule aérien vole selon les instructions encore valables.

3. Procédé de navigation d'un véhicule aérien selon la revendication 2, dans lequel le calcul de la trajectoire d'aéronef comprend :
a) obtenir des conditions initiales du véhicule aérien (622) ;
b) déterminer une première opération dans la liste d'opérations (632), dans lequel la première opération comprend des premières instructions dans chacun des fils, et des effets associés à ces instructions ;
c) mettre à jour (642) le vecteur d'état d'un véhicule aérien pendant que la première opération est effectuée, dans lequel le vecteur d'état du véhicule aérien comprend des variables liées au vol ;
d) évaluer, selon le vecteur d'état du véhicule aérien, quelles instructions dans chaque fil sont encore valables (644) ;
e) déterminer des opérations suivantes (646) dans la liste d'opérations, dans lequel une opération suivante dans la liste d'opérations comprend toutes les instructions encore valables dans un stade donné de la trajectoire d'aéronef, et les effets associés à ces instructions valables, et ;
f) terminer le calcul de trajectoire (650) lorsque, dans un stade donné de la trajectoire de vol, aucune instruction sur aucun des fils est encore valable.

4. Procédé de navigation d'un véhicule aérien selon la revendication 1, dans lequel il comprend vérifier la syntaxe du langage de description d'intention d'aéronef des instructions comprenant au moins un des fils de la trajectoire éditée, pour garantir que les limitations de performance d'aéronef sont respectées, que toutes les instructions sont faisables et cohérentes les unes avec les autres, et que les fils sont complets.

5. Procédé de navigation d'un véhicule aérien selon la revendication 1, dans lequel au moins un noeud d'instructions sur au moins un fil de la trajectoire d'aéronef est un noeud composite conditionnel (304b) comprenant au moins deux ensembles de noeuds d'instructions avec leurs noeuds déclencheurs associés, dans lequel :
a. le début de validité de l'un ou l'autre des ensembles de noeuds d'instructions du noeud composite conditionnel est soumis à remplir une condition (304bCON) du noeud composite conditionnel (304b) ;
b. remplir la condition associée au déclencheur (304a') dans le fil (304) qui précède immédiatement le noeud composite conditionnel (304b) démarre l'évaluation de la condition (304bCON) du noeud composite conditionnel (304b), et :
c. remplir la condition d'un déclencheur (304b1', 304b2') dans le noeud composite conditionnel (304b) qui est associé à la dernière instruction (304b1, 304b2b) dans l'un ou l'autre des ensembles d'instructions du noeud composite conditionnel démarre la validité de l'instruction (304c) dans le fil (304) qui suit immédiatement le noeud composite conditionnel.

6. Procédé de navigation d'un véhicule aérien selon la revendication 1, dans lequel au moins un noeud d'instructions sur au moins un fil de la trajectoire d'aéronef est un noeud de boucle (406b) comprenant un ensemble de noeuds d'instructions (406ba, 406bc) avec leurs noeuds déclencheurs associés (406ba', 406bc'), dans lequel :
a. remplir la condition associée au déclencheur (406a_{'}) dans le fil (406) qui précède immédiatement le noeud de boucle (406b) démarre l'évaluation d'une condition principale (406bCON) du noeud de boucle ;
b. le début de validité de la première instruction (406ba) de l'ensemble d'instructions comprenant le noeud de boucle est soumis à remplir la condition principale du noeud de boucle ;
c. si la condition principale du noeud de boucle n'est pas remplie, la validité du noeud de boucle se termine et l'instruction (406c) dans le fil qui suit immédiatement le noeud de boucle démarre sa validité, et ;
d. remplir une condition d'un noeud déclencheur (406bc') qui est associé au dernier noeud d'instructions (406bc) dans l'ensemble de noeuds d'instructions comprenant le noeud de boucle démarre l'évaluation de la condition principale (406bCON) du noeud de boucle.

7. Procédé de navigation d'un véhicule aérien selon la revendication 1, dans lequel au moins un fil comprend des instructions pour définir de manière univoque le mouvement de l'aéronef dans un plan vertical.

8. Procédé de navigation d'un véhicule aérien selon la revendication 1, dans lequel au moins un fil comprend des instructions pour définir de manière univoque le mouvement de l'aéronef dans un plan horizontal.

9. Procédé de navigation d'un véhicule aérien selon la revendication 1, dans lequel au moins un fil comprend des instructions pour définir de manière univoque des manoeuvres spécifiques de l'aéronef dans chaque stade du vol.

10. Procédé de navigation d'un véhicule aérien selon la revendication 1, dans lequel au moins un fil comprend des instructions pour définir de manière univoque la vitesse et l'accélération de l'aéronef.

11. Procédé de navigation d'un véhicule aérien selon la revendication 1, dans lequel l'activation d'un déclencheur établi la fin de validité de l'instruction à laquelle est associé le déclencheur et le début de validité d'une instruction dans un fil qui suit immédiatement le déclencheur, dans lequel l'activation du déclencheur est soumise à remplir une condition spécifiée par le déclencheur et/ou à l'activation d'un autre déclencheur associé à une autre instruction dans n'importe quel fil.

12. Support lisible par ordinateur comprenant des instructions qui, lorsqu'elles sont exécutées par un ordinateur, mènent l'ordinateur à mettre en oeuvre le procédé selon les revendications 1 à 11.
